# FASCICULE DE BREVET EUROPEEN

(11) **EP 3 552 951 B1**
(45) Date de publication et mention de la délivrance du brevet: **29.05.2024**
(21) Numéro de dépôt: 19167450.6
(22) Date de dépôt: 04.04.2019
(51) Int. Cl.: B64D 33/02

(54) **PANNEAU D'ATTÉNUATION ACOUSTIQUE POUR AÉRONEF PRÉSENTANT DES PROPRIÉTÉS D'ABSORPTION ACOUSTIQUE COMBINÉES**
SCHALLDÄMMPLATTE FÜR LUFTFAHRZEUG, DIE KOMBINIERTE SCHALLABSORPTIONSEIGENSCHAFTEN AUFWEIST
ACOUSTIC ATTENUATION PANEL FOR AIRCRAFT HAVING COMBINED ACOUSTIC ABSORPTION PROPERTIES

(30) Priorité: 10.04.2018 FR 1853108
(43) Date de publication de la demande: 16.10.2019
(73) Titulaire: Airbus Opérations SAS, 31060 Toulouse (FR)
(72) Inventeur: PORTE, Alain, 31770 COLOMIERS (FR); LALANE, Jacques, 31650 SAINT ORENS DE GAMEVILLE (FR); CARAZO MENDEZ, Arnulfo, 31000 TOULOUSE (FR)
(74) Mandataire: Gevers & Orès

(56) Documents cités:
- EP-A2- 2 070 816
- WO-A1-2008/006959
- WO-A1-2011/086273
- FR-A1- 2 954 282
- US-A- 4 298 090
- US-B1- 9 732 677

## Description

### DOMAINE TECHNIQUE

La présente invention concerne un panneau d'atténuation acoustique pour aéronef, et en particulier pour un capot de nacelle de réacteur d'un aéronef.

### ETAT DE LA TECHNIQUE

On sait que sur un aéronef, par exemple sur un avion de transport, des bruits importants sont souvent générés, notamment par les ensembles propulsifs (ou réacteurs) de l'aéronef. Il est connu, pour réduire l'effet sonore produit par les réacteurs de l'aéronef de prévoir, en particulier au niveau des nacelles des réacteurs, des parois pourvues de panneaux présentant une bonne absorption acoustique.

De façon usuelle, un panneau d'atténuation acoustique, dit panneau acoustique ci-après, comprend généralement une structure acoustique pourvue d'une plaque réalisée en un matériau et/ou une structure présentant de bonnes propriétés d'absorption acoustique, notamment pour les fréquences des bruits les plus gênants. Cette structure utilisée pour l'absorption acoustique peut donc être en matériau alvéolaire mais aussi à base de mousse ou de matériau fibreux.

Cette plaque présente souvent, pour ce faire, une structure alvéolaire en nid d'abeilles pour la plupart des panneaux, et est munie sur ses deux faces, respectivement, d'une peau dite résistive (« résistive skin » en anglais) souvent perforée et d'une peau arrière non perforée (« backing skin » en terme anglais). Le panneau acoustique est agencé pour que la peau résistive soit située à proximité de la source de bruit, notamment en amont et/ou en aval de la soufflante (« fan » en anglais) dans le cas d'un réacteur d'aéronef, pour réaliser une absorption efficace du bruit généré en amont et aval de la soufflante. La taille des alvéoles (section et hauteur) de la structure en nid d'abeilles est globalement adaptée à la fréquence du bruit à absorber.

Un ensemble propulsif d'un aéronef comprend plus particulièrement une entrée d'air qui est pourvue d'un tel panneau acoustique. Cette entrée d'air doit notamment assurer le traitement acoustique de la partie avant de l'ensemble propulsif et absorber les nuisances sonores provenant de la soufflante de l'ensemble propulsif. Le panneau acoustique assure principalement le traitement acoustique et une grande partie de l'aérodynamique interne.

Dans la configuration actuelle, les parties avant et arrière du panneau acoustique ne présentent pas de propriété acoustique. En effet, elles ont pour unique fonction de fixer le panneau acoustique. Il apparaît donc une perte de capacité d'absorption acoustique à ces parties avant et arrière. Le principe constructif du panneau acoustique ne permet pas de rendre ces parties avant et arrière, présentant une forme en biseau, absorbantes acoustiquement comme le reste du panneau en ajoutant par exemple un matériau alvéolaire.

Par ailleurs, on connaît, par le document FR 2 954 282, une nacelle d'aéronef incorporant un élément de jonction entre une lèvre d'entrée d'air et un panneau d'atténuation acoustique. Le panneau d'atténuation acoustique comporte une structure acoustique pourvue d'une structure alvéolaire ainsi que d'une peau résistive et d'une couche réflectrice. Le panneau d'atténuation acoustique comporte également un élément acoustique au niveau de l'élément de jonction entre le panneau acoustique et la lèvre.

La présente invention a pour objet d'améliorer les propriétés d'absorption acoustique d'un panneau acoustique, notamment d'une entrée d'air d'un ensemble propulsif en particulier en augmentant la surface acoustique.

### EXPOSÉ DE L'INVENTION

La présente invention concerne un panneau acoustique pour aéronef, et en particulier pour une nacelle d'un ensemble propulsif (ou réacteur) de l'aéronef, ledit panneau acoustique comprenant une structure acoustique pourvue d'une peau interne à porosité contrôlée dite peau résistive, d'une structure alvéolaire et d'une peau dite arrière, réflectrice en zone alvéolaire.

Ledit panneau acoustique comporte au moins un dispositif acoustique auxiliaire à cavités configuré pour réaliser une absorption acoustique, ciblant, de préférence, des basses fréquences, tout en gardant une peau arrière approximativement à la même hauteur (soit entre 0 et + 30% de plus en hauteur des cellules de la structure alvéolaire) qu'au droit de structures alvéolaires à guide d'ondes, ledit dispositif acoustique auxiliaire à cavités étant solidaire de ladite structure acoustique, ledit dispositif acoustique auxiliaire à cavités comprenant une pluralité de chambres (ou cavités) adjacentes séparées par des parois mitoyennes, chacune desdites chambres (axillaires) ayant de préférence un volume significativement plus grand qu'une cellule de la structure alvéolaire (soit entre 3 et 30 fois), et étant pourvue de perforations aptes à réaliser une absorption acoustique.

Ainsi, grâce à l'invention, on ajoute au moins un dispositif acoustique auxiliaire à la structure acoustique. La combinaison de la structure acoustique alvéolaire et du dispositif acoustique auxiliaire à cavités permet de combiner les propriétés d'absorption acoustique des deux types d'absorption acoustique et de fréquences, et ainsi d'augmenter l'absorption acoustique globale du panneau acoustique, soit de plus de prévoir des éléments acoustiques adaptés à des sources de bruits qui ne sont pas absorbés par la seule structure acoustique alvéolaire.

Ledit panneau acoustique et notamment la combinaison de la structure acoustique alvéolaire et du dispositif acoustique auxiliaire peuvent être réalisés de différentes manières.

L'invention est exposée dans le jeu de revendications joint.

### BRÈVE DESCRIPTION DES FIGURES

Les figures annexées feront bien comprendre comment l'invention peut être réalisée. Sur ces figures, des références identiques désignent des éléments semblables. Plus particulièrement :
- les figures 1 et 2 sont des vues schématiques, en coupe et en perspective, d'un premier mode de réalisation d'un panneau acoustique non couvert par le texte des revendications;
- la figure 3 est une vue partielle, en perspective, d'un dispositif acoustique auxiliaire dudit premier mode de réalisation du panneau acoustique ;
- la figure 4 est une vue schématique, en coupe, d'un second mode de réalisation d'un panneau acoustique ;
- la figure 5 est une vue partielle, en perspective, d'un dispositif acoustique auxiliaire dudit second mode de réalisation du panneau acoustique ;
- la figure 6 est une vue schématique, en coupe, d'une variante dudit second mode de réalisation du panneau acoustique ;
- la figure 7 est une vue similaire à celle de la figure 3 avec des chambres de tailles différentes ; et
- les figures 8 et 9 illustrent schématiquement les étapes principales, respectivement, de deux procédés différents de fabrication d'un panneau acoustique.

### DESCRIPTION DÉTAILLÉE

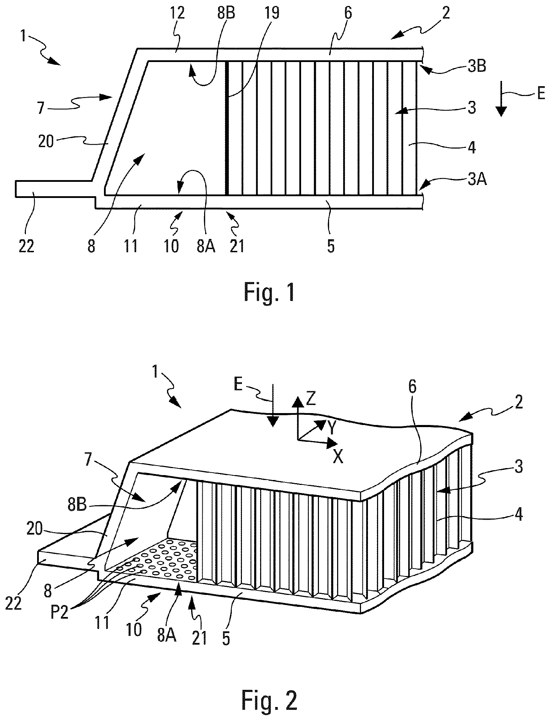

Le panneau acoustique 1 (ou panneau d'atténuation acoustique) représenté schématiquement dans les figures 1 à 3, est destiné à permettre de réduire (ou atténuer) du bruit en l'absorbant, sur un aéronef (non représenté), en particulier sur un avion de transport.

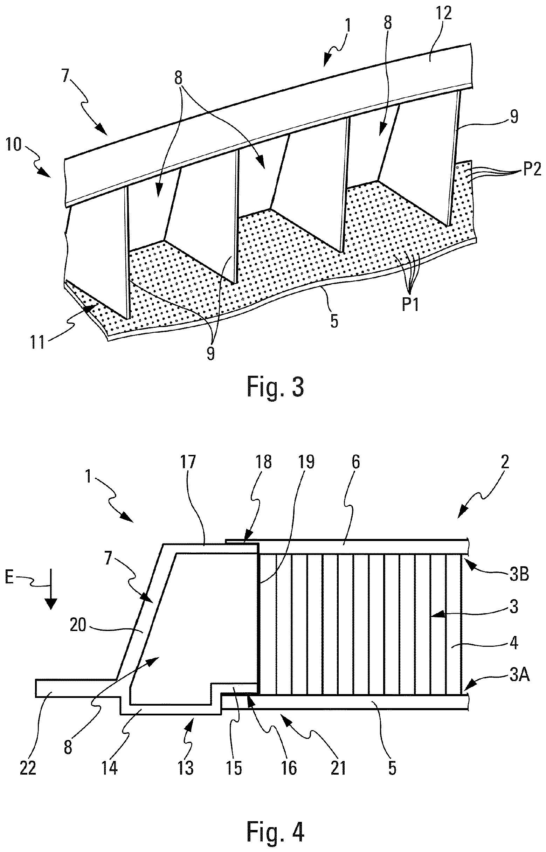

De façon usuelle, ce panneau acoustique 1 comprend une structure acoustique 2 qui est apte à absorber du bruit pour l'atténuer et qui comporte, comme représenté sur les figures 1 et 2 :
- une structure alvéolaire 3 réalisée en un matériau 4 précisé ci-après ;
- une peau 5 dite résistive (ou peau avant) qui est perméable et poreuse à l'air, c'est-à-dire qui est par exemple pourvue d'une pluralité de perforations (ou trous, évidements, ajournements) P1, traversant ladite peau résistive 5 de part en part, lesdites perforations P1 étant représentées par des points P1 sur la figure 3 notamment ; et
- une peau 6 dite arrière, réflectrice dans la zone alvéolaire (« backing skin » en anglais), pour fermer le panneau acoustique 1. Cette peau arrière 6 est non perforée, sauf éventuellement localement pour des raisons de drainage d'eau.

Plus précisément, la peau résistive 5 présente une perméabilité à l'air, donc sonore, au moins à des sons devant être atténués par le panneau acoustique 1, plus importante que la peau arrière 6.

Ces peaux résistive 5 et arrière 6 sont agencées et fixées, respectivement, de part et d'autre de la structure alvéolaire 3, à savoir sur une face 3A (avant) de la structure alvéolaire 3 pour la peau résistive 5 et sur une face 3B (arrière) de la plaque 3 pour la peau arrière 6 (figure 1).

Sur la figure 2, on a représenté un repère XYZ avec une direction (ou axe) Z orthogonale à la structure alvéolaire 3 (sensiblement plane dans l'exemple de cette figure 2) définie dans un plan XY. De plus, une flèche E indique un sens définissant un sens dit avant (dirigé selon l'axe Z et vers la source de bruit à traiter) par rapport à la structure alvéolaire 3. Le sens opposé à celui de la flèche E définit un sens dit arrière par rapport à la structure alvéolaire 3. Dans la suite de la description, les adjectifs arrière et avant sont définis par rapport au sens de la flèche E.

Généralement, le panneau acoustique 1 est disposé pour que la peau résistive 5 soit positionnée à proximité et de préférence proche (ou en regard) de la source de bruit à atténuer. La peau résistive 5 est agencée plus près de la source de bruit que la peau arrière 6. Le bruit pénètre par les perforations P1, à travers la peau résistive 5, une partie de cette énergie se dissipe en se transformant en chaleur, puis communique à l'intérieur de la structure alvéolaire 3 et est ensuite réfléchie par la peau arrière 6, se retrouvant ainsi en opposition de phase avec l'onde entrante. La peau résistive 5 est réalisée pour présenter une résistance mécanique suffisante en fonction de l'application envisagée, notamment pour supporter la pression d'un flux d'air, et les accélérations des facteurs de charges dans le cas d'un réacteur d'aéronef.

Si la peau résistive 5 est aérodynamique, c'est-à-dire si elle est en contact avec le flux d'air, la surface de la peau résistive 5 est agencée dans le lit de l'écoulement.

La peau résistive 5 peut être réalisée de différentes manières. En particulier, elle peut être réalisée sous forme :
- d'une peau perforée ou micro-perforées avec des trous de différentes formes (circulaire ou oblong) ;
- d'un grillage (« wiremesh ») métallique ou polymère tissé très finement afin d'être perméable au son, mais de limiter les interactions aérodynamiques et de réduire la traînée ;
- d'un ensemble plus ou moins complexe composé de grillage et de renforts à base de matériaux composites ou métalliques.

L'absorption acoustique est réalisée par la peau résistive 5. Dans certains modes de réalisation, le matériau 4 de la structure alvéolaire 3 peut participer à l'absorption acoustique, comme précisé ci-après.

La peau arrière 6, peut également être aérodynamique (en contact avec le flux aérodynamique) selon les configurations et l'installation du panneau acoustique sur l'aéronef. Elle a notamment pour fonction d'assurer la tenue structurelle de la structure acoustique 2.

Ledit panneau acoustique 1 comporte, également, au moins un dispositif acoustique auxiliaire à cavités 7 configuré pour réaliser une absorption acoustique. Le dispositif acoustique auxiliaire à cavités 7 est solidaire de ladite structure acoustique 2, et il comprend une pluralité de chambres (ou cavités) 8 adjacentes, séparées par des parois 9 (ou cloisons) mitoyennes, comme représenté sur la figure 3 notamment. Chacune desdites chambres 8 (fermées) est pourvue de perforations P2 et est apte à réaliser une absorption acoustique.

Ainsi, le panneau acoustique 1 comporte, en plus de la structure acoustique 2 , au moins un tel dispositif acoustique auxiliaire à cavités 7. La combinaison de la structure acoustique 2 et du dispositif acoustique auxiliaire à cavités 7 permet de combiner les propriétés d'absorption acoustique des deux types d'absorption acoustique, et ainsi d'augmenter l'absorption acoustique globale du panneau acoustique 1 et de prévoir des chambres (ou cavités) 8 d'atténuation acoustique adaptées à des bruits qui ne sont pas absorbés par la seule structure alvéolaire 3, comme précisé ci-dessous.

Ledit panneau acoustique 1 et notamment la combinaison de la structure acoustique 2 et du dispositif acoustique auxiliaire à cavités 7 peuvent être réalisés de différentes manières.

Dans le cadre de la présente invention, les cavités ou chambres 8 du dispositif acoustique auxiliaire à cavités 7 peuvent également être réalisées de différentes manières. Les chambres 8 sont fermées, avec comme seules ouvertures pour accéder à l'intérieur de la chambre 8, les perforations P2 (ou micro-perforations), comme représenté sur les figures 2, 3 et 4. Ces perforations P2 (ou micro-perforations) présentent des surfaces réduites, en particulier telles que la forme (quelconque) des perforations P2 puissent être incluse dans un cercle de diamètre compris entre 0,2 et 0,8 millimètres. Tout type d'agencement et de forme de ces perforations P2 est possible. A titre d'illustration, la répartition des perforations peut être réalisée en lignes et en colonnes sur la surface de la paroi concernée, avec des distances de séparation de deux perforations P2 adjacentes de 0,1 à 3 millimètres.

Dans les figures 1 à 3, la structure acoustique 2 et le dispositif acoustique auxiliaire à cavités 7 forment une pièce 10 monobloc.

Dans ce panneau, le dispositif acoustique auxiliaire 7 comporte une face 11 dite avant qui correspond, de préférence, au prolongement de la peau résistive 5 (en particulier au-delà de la structure acoustique 2, notamment vers un bord périphérique 21). Les parois avant 8A des chambres 8 du dispositif acoustique auxiliaire à cavités 7 font partie de cette face avant 11. La répartition, la forme, la taille et/ou la surface globale des perforations P2 sur la face 11 peuvent être, selon le mode de réalisation, identique ou différente de la répartition, la forme, la taille et/ou la surface globale des perforations P1 sur la peau résistive 5.

De plus, dans l'exemple représenté de ce premier mode de réalisation, le dispositif acoustique auxiliaire à cavités 7 comporte une face 12 dite arrière qui correspond, de préférence, au prolongement de la peau arrière 6. Les parois arrière 8B des chambres 8 font partie de cette face arrière 12.

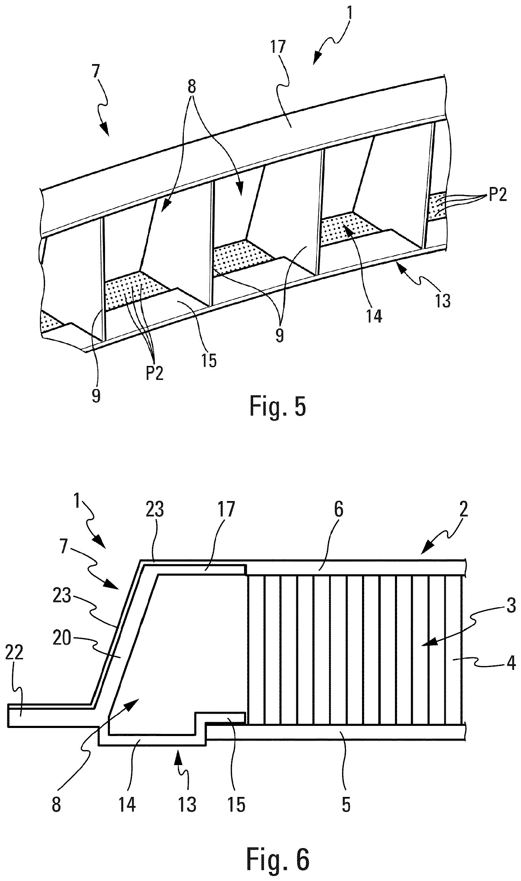

Par ailleurs, dans un second mode de réalisation selon l'invention telle que revendiquée, représenté sur les figures 4 et 5, le dispositif acoustique auxiliaire à cavités 7 est fixé sur la structure acoustique 2.

Dans l'exemple représenté de ce second mode de réalisation, le dispositif acoustique auxiliaire à cavités 7 comporte une face 13 dite avant, qui comprend au moins une première partie 15 dépourvue de perforations et une seconde partie 14 pourvue de perforations P2. La peau résistive 5 de la structure acoustique 2 est fixée sur la seconde partie 15 (dépourvue de perforations) de ladite face avant 13, sur une bande référencée 16 sur la figure 4.

De plus, dans l'exemple représenté de ce second mode de réalisation, le dispositif acoustique auxiliaire à cavités 7 comporte une face 17 dite arrière qui est fixée sur la peau arrière 6 de la structure acoustique 8, sur une bande référencée 18 sur la figure 4.

Différents types de fixations sont envisageables pour fixer la partie 15 de la face avant 13 sur la peau résistive 5 et/ou pour fixer la face arrière 17 sur la peau arrière 6. Ces fixations peuvent être réalisées par collage ou par drapage notamment.

Dans l'exemple de la figure 6 (correspondant à une variante de réalisation de l'exemple de la figure 4), un drapage complet illustré par une peau 23 est faite à partir de la peau arrière 6 sur la face 17 et des éléments 20 et 22 précisés ci-dessous. Le drapage de la peau arrière 6 structurale peut être réalisé partiellement ou totalement sur les chambres.

De préférence, les perforations P2 sont prévues sur une face avant 11, 13 du dispositif acoustique auxiliaire 7, c'est-à-dire du même côté (vers l'avant) que les perforations P1 de la peau résistive 5 (peau avant). Dans un mode de réalisation préféré, la face avant 11, 13 du dispositif acoustique auxiliaire 7 et la peau résistive 5 sont positionnées à proximité et de préférence proche (ou en regard) de la source de bruit à atténuer, ce qui permet notamment d'augmenter l'efficacité de l'absorption acoustique.

Dans un mode de réalisation particulier, le panneau acoustique 1 comporte au moins une peau auxiliaire 19 qui est agencée entre le dispositif acoustique auxiliaire 7 et la structure acoustique 2, comme représenté sur les figures 1 et 4. Cette peau auxiliaire 19 représente une paroi des chambres (ou cavités) 8 du dispositif acoustique auxiliaire 7. Dans les exemples représentés, les chambres 8 sont ainsi formées, chacune, aussi bien dans le mode de réalisation de la figure 1 que dans celui de la figure 4, des cloisons 9, d'une paroi avant (11 ou 13), d'une paroi arrière (12 ou 17), de la peau auxiliaire 19 et d'une paroi 20.

Dans le cadre de présente invention, le dispositif acoustique auxiliaire 7 peut être solidarisé de la structure acoustique 2, au niveau d'une zone quelconque de la structure acoustique 2. Il est ainsi possible de prévoir le dispositif acoustique auxiliaire 7 sur une partie ou zone du plan XY de l'une des peaux, de la peau avant 5 ou de la peau arrière 6.

Toutefois, dans un mode de réalisation préféré (mais non exclusif), le dispositif acoustique auxiliaire à cavités 7 est agencé au moins sur une partie d'au moins un bord périphérique 21 de la structure acoustique 2, comme représenté sur les figures 1, 2 et 4.

Comme le dispositif acoustique auxiliaire 7 est agencé sur un bord périphérique 21 de la structure acoustique 2, cet agencement, en plus d'augmenter les capacités et propriétés d'absorption, n'a pas ou très peu d'incidence en terme d'encombrement et tout au plus une faible incidence en terme de masse pour le panneau acoustique 1. En effet, au bord périphérique 21, le panneau acoustique comporte généralement une partie d'extrémité pour fixer le panneau acoustique 1. Comme représenté notamment sur les figures 1, 2 et 4, le dispositif acoustique auxiliaire à cavités 7 peut comprendre, ou non, une plaque 22 d'extrémité permettant de fixer le panneau acoustique 1. Cette plaque 22 d'extrémité peut être dans la continuité d'une des peaux 5 et 6.

En outre, dans une variante particulière (non représentée) de ce mode réalisation préféré, le panneau acoustique 1 comporte au moins deux dispositifs acoustiques auxiliaires 7 agencés, respectivement, sur au moins deux bords périphériques de la structure acoustique 2 ou sur au moins deux tronçons d'un bord périphérique de la structure acoustique 2.

Par ailleurs, dans un premier mode réalisation, le dispositif acoustique auxiliaire 7 comporte des chambres 8 identiques, comme représenté sur les figures 3 et 5 notamment.

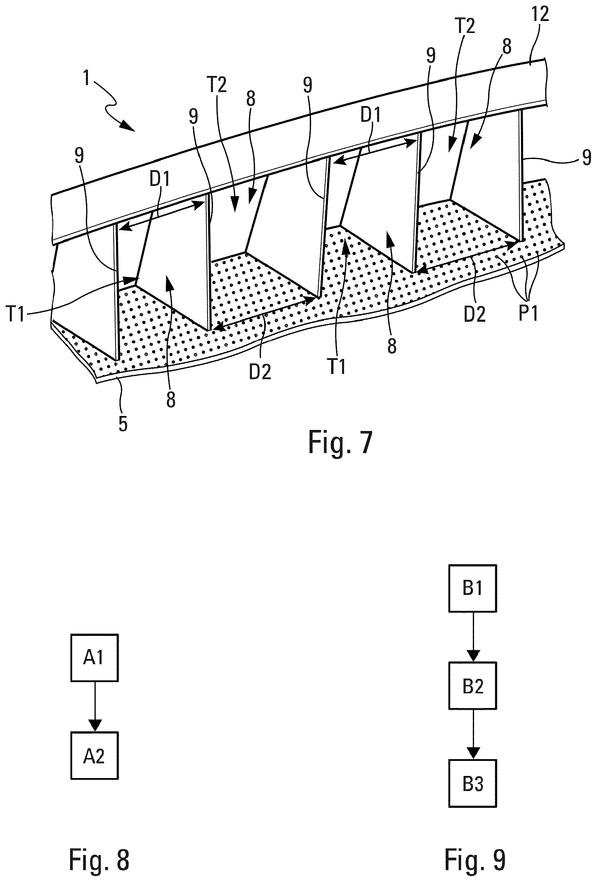

En outre, dans un second mode de réalisation, le dispositif acoustique auxiliaire 7 comporte des chambres 8 d'une pluralité (deux, trois, quatre, ...) de types différents, comme représenté sur la figure 7.

De préférence, chaque type T de chambre 8 est configuré pour permettre une absorption acoustique privilégiée dans au moins une gamme de fréquences acoustiques donnée. Par conséquent, pour deux types T1 et T2 différents comme dans l'exemple de la figure 7, les chambres 8 du type T1 réalisent une absorption acoustique privilégiée dans une gamme de fréquences acoustiques donnée différente de celle dans laquelle est réalisée l'absorption acoustique des chambres 8 du type T2.

On entend par « absorption acoustique privilégiée » dans une gamme de fréquences acoustiques considérée, le fait qu'une chambre 8 possède des propriétés acoustiques lui permettant d'absorber efficacement des bruits présentant des fréquences faisant partie de ladite gamme de fréquences acoustiques considérée, et ceci qu'il soit en mesure ou non d'absorber des bruits ayant des fréquences hors de ladite gamme.

Pour ce faire, pour chaque chambre 8 du dispositif acoustique auxiliaire 7, au moins le volume de la chambre 8 et la surface globale de l'ensemble des perforations P2 dans la chambre 8 sont adaptés afin de conférer à ladite chambre 8 une absorption acoustique privilégiée dans la gamme de fréquences acoustiques considérée.

Dans l'exemple de la figure 7, les types différents sont obtenus par des volumes de chambre différents. Ces volumes différents sont obtenus simplement par des écartements différents des parois 9 successives, selon la direction Y (figure 2), avec une distance d'écartement D1 pour les chambres 8 de type T1 et une distance d'écartement D2 (supérieure à la distance d'écartement D1) pour les chambres 8 de type T2. Le reste des caractéristiques de ces chambres 8 est identique.

Dans une première variante de réalisation, les chambres 8 de types différents peuvent être mélangés, en étant notamment répartis relativement uniformément dans le dispositif auxiliaire acoustique 7. Cette répartition peut, par exemple être, alternative, c'est-à-dire que, dans le cas de deux types T1 et T2 différents de chambres, le long d'un tronçon (selon la direction Y) du dispositif auxiliaire acoustique 7 sont prévues alternativement une chambre 8 de type T1, puis une chambre 8 de type T2, puis une chambre 8 de type T1, et ainsi de suite, comme représenté dans l'exemple de la figure 7.

Dans cette première variante de réalisation, toutes les parties du dispositif acoustique auxiliaire à cavités 7 sont configurées pour absorber la même pluralité de gammes de fréquences acoustiques.

En outre, dans une seconde variante de réalisation (non représentée), les chambres (ou cavités) 8 d'un même type, parmi lesdits différents types, peuvent être soit regroupées, dans au moins une zone ou un tronçon donné du dispositif acoustique auxiliaire 7, soit participer à des écartements de parois 9 différents créant ainsi des volumes différents, pour amortir des sources de bruits différentes.

On peut ainsi prévoir différentes zones du panneau acoustique 1 qui sont appropriées, chacune, à l'absorption de bruits de fréquences particulières. Cette seconde variante de réalisation est notamment avantageuse en présence de sources de bruits différentes, présentant des fréquences différentes et localisées à des endroits différents.

Le panneau acoustique 1 est alors configuré et disposé pour que chacune de ces zones soit située le plus près possible de la source de bruit qu'elle doit atténuer.

Le dispositif d'absorption acoustique 7 permet ainsi d'absorber des bruits présentant des fréquences différentes, et en particulier des fréquences plus basses ou plus élevées, que celles du ou des bruits absorbés par la structure acoustique 2. La combinaison de la structure acoustique 2 et du dispositif acoustique auxiliaire 7 permet donc de combiner les propriétés et caractéristiques des deux types d'absorption acoustique, et ainsi d'augmenter la gamme de fréquences de bruits susceptibles d'être atténuées par le panneau acoustique 1. De plus, le dispositif acoustique auxiliaire 7 permet d'augmenter la surface acoustique du panneau acoustique 1.

Par ailleurs, dans le cadre de la présente invention, la peau résistive 5 (et le cas échéant l'ensemble ou une partie du panneau acoustique 1) peut être plane, comme représenté sur les figures 1 à 7, ou être incurvée (simple ou double courbure, convexe et/ou concave).

Dans le cadre de la présente invention, la plaque 3 peut également être réalisée de différentes manières.

Plus précisément, le matériau 4 de la plaque 3 peut être réalisé selon l'une des manières suivantes :
- avec une structure alvéolaire, de préférence une structure en nids d'abeille, ou une structure alvéolaire présentant des alvéoles d'autres formes. Dans ce cas, l'absorption est réalisée par la peau résistive 5 perforée, la structure alvéolaire ayant pour fonction de définir une fréquence d'absorption optimale. L'énergie des ondes acoustiques est réduite par des pertes visqueuses au niveau des perforations de la peau résistive 5 ; ou
- avec une mousse présentant des propriétés acoustiques appropriées ; ou
- avec un matériau fibreux ou un matériau fritté présentant des propriétés acoustiques appropriées.

Dans les deux derniers exemples (mousse, matériau fibreux ou fritté), le matériau 4 peut être un matériau absorbant acoustique, qui participe à l'absorption acoustique générée par la structure acoustique 2.

La matière de la plaque 3 peut être, par exemple, un matériau polymère renforcé de fibres de carbone de type CFRP (pour « Carbon Fiber Reinforced Polymer » en anglais), de fibre d'aramide, de fibre de verre ou du métal tel que l'aluminium ou le titane.

Le panneau acoustique 1, tel que décrit ci-dessus, présente de nombreux avantages. Il permet notamment :
- d'optimiser l'absorption acoustique ;
- de traiter ou d'absorber différentes gammes de fréquences acoustiques ;
- de combiner des éléments présentant différentes propriétés d'absorption acoustiques ;
- et ceci sans augmentation de masse et d'encombrement (et le cas échéant de traînée), ou tout au plus une augmentation de masse et éventuellement d'encombrement (et de traînée) réduite.

En outre, pour au moins certains des modes de réalisation envisageables, le ou les dispositifs acoustiques auxiliaires 7 qui sont solidarisés de la structure acoustique 2 :
- peuvent également être utilisés pour fixer le panneau acoustique 1 sur un élément particulier par exemple sur une lèvre avant, par exemple via la plaque 22 (figures 1, 2, 4 et 6), et une bride d'une entrée d'air d'un ensemble propulsif d'un aéronef ; et
- peuvent participer à la tenue structurale du panneau acoustique 1 en supportant un certain niveau d'efforts structuraux.

On décrit ci-après deux procédés de fabrication (non limitatifs) d'un panneau acoustique 1 tel que celui décrit ci-dessus.

Un premier procédé de fabrication préféré comporte une pluralité d'étapes successives comprenant au moins, les étapes suivantes, comme illustré sur la figure 8 (en lien avec le premier mode de réalisation de la figure 1) :
- une étape A1 consistant à former un ensemble monobloc ainsi formé comprenant la structure acoustique 2 pourvue de la plaque 3 et des peaux résistive 5 et arrière 6 et un ou plusieurs dispositifs acoustiques auxiliaires 7, avec notamment une perforation de la peau résistive 5 globale (avec son prolongement 11) ; et
- une étape A2 consistant à réaliser une cuisson de l'ensemble monobloc ainsi formé (et notamment de la peau résistive 5 globale) pour fabriquer une pièce monobloc 10.

Un second procédé de fabrication comporte une pluralité d'étapes successives comprenant au moins, les étapes suivantes, comme illustré sur la figure 9 (en lien avec le second mode de réalisation de la figure 4) :
- une étape B1 consistant à fabriquer la structure acoustique 2 pourvue de la plaque 3 et des peaux résistive 5 et arrière 6, avec notamment une cuisson de peaux dans le cas d'un matériau composite ;
- une étape B2 consistant à fabriquer un ou plusieurs dispositifs acoustiques auxiliaires 7, avec notamment une cuisson dans le cas d'un matériau composite ; et
- une étape B3 consistant à fixer le ou les dispositifs acoustiques auxiliaires 7 sur la structure acoustique 2.

Dans une application préférée (non représentée), le panneau acoustique 1 est destiné à permettre de réduire le bruit sur une nacelle (non représentée) d'un ensemble propulsif (ou réacteur) d'un aéronef. Le panneau acoustique 1 est agencé dans l'entrée d'air de l'ensemble propulsif.

La localisation du dispositif acoustique auxiliaire 7 peut jouer un rôle dans son fonctionnement. A titre d'illustration, en aval du flux d'air (proche des pales de la soufflante de l'ensemble propulsif), il permet de diminuer le bruit directement à la source, ce qui permet également d'atténuer les autres fréquences (car il diminue l'énergie globale du son). En amont, il permet de réaliser une atténuation accrue de la fréquence choisie. On peut donc envisager d'atténuer des bruits de fréquences en amont et/ou en aval et/ou sur la circonférence.

De façon usuelle, le ou les panneaux acoustiques 1 destinés à une entrée d'air sont dimensionnés par rapport à :
- une perte de pale ;
- un chargement aérodynamique (surpression) sur tout le périmètre interne du panneau acoustique ;
- un choc d'oiseau ;
- un cas thermique.

Le dispositif acoustique auxiliaire 7 du panneau acoustique 1 permet donc de réduire des bruits de fréquences spécifiques, comme par exemple la fréquence de passage des pales qui présente une forte émergence acoustique. Le dispositif acoustique auxiliaire 7 permet de viser de hautes comme de très basses fréquences, ce qui n'est le cas d'une structure en nids d'abeille par exemple. On peut ainsi avoir une réduction du bruit d'un volume important sans devoir réaliser de micro-perforations toute la base.

## Revendications

1. Panneau acoustique pour aéronef, ledit panneau acoustique (1) comportant une structure acoustique (2) pourvue d'une structure alvéolaire (3) ainsi que d'une peau dite résistive (5) avant et d'une peau dite arrière (6) agencées, respectivement, de part et d'autre de cette structure alvéolaire (3), le panneau acoustique (1) comportant au moins un dispositif acoustique auxiliaire (7) configuré pour réaliser une absorption acoustique, le dispositif acoustique auxiliaire (7) étant solidaire de ladite structure acoustique (2), ledit dispositif acoustique auxiliaire (7) étant agencé sur un bord périphérique (21) de la structure acoustique (2) où le panneau acoustique (1) comporte une partie d'extrémité pour fixer ledit panneau acoustique (1), ledit dispositif acoustique auxiliaire étant un dispositif acoustique auxiliaire à cavités (7) comprenant une pluralité de chambres (8) adjacentes séparées par des parois (9) mitoyennes, chacune desdites chambres (8) étant pourvue de perforations (P2) et étant apte à réaliser une absorption acoustique, les perforations (P2) étant prévues sur une face avant (11, 13) du dispositif acoustique auxiliaire à cavités (7), ladite face avant (11, 13) perforée étant agencée d'un même côté du panneau acoustique (1) que la peau résistive (5) avant,
**caractérisé en ce que** la face avant (13) du dispositif acoustique auxiliaire à cavités (7) comprend au moins une première partie (14) pourvue de perforations (P2) et une seconde partie (15) dépourvue de perforations et **en ce que** la peau résistive (5) de la structure acoustique (2) est fixée sur la seconde partie (15) de ladite face avant (13).

2. Panneau acoustique selon la revendication 1,
**caractérisé en ce que** le dispositif acoustique auxiliaire à cavités (7) comporte une face (17) dite arrière qui est fixée sur la peau arrière (6) de la structure acoustique (2) de façon alignée ou non.

3. Panneau acoustique selon l'une quelconque des revendications précédentes,
caractérisé qu'il comporte au moins deux dispositifs acoustiques auxiliaires (7) agencés, respectivement, sur au moins deux bords périphériques de la structure acoustique ou sur au moins deux tronçons d'un bord périphérique de la structure acoustique.

4. Panneau acoustique selon l'une quelconque des revendications 1 à 3, **caractérisé en ce que** le dispositif acoustique auxiliaire (7) comporte des chambres (8) de volume identique.

5. Panneau acoustique selon l'une quelconque des revendications 1 à 3, **caractérisé en ce que** le dispositif acoustique auxiliaire (7) comporte des chambres (8) de plusieurs types (T1, T2) différents.

6. Panneau acoustique selon la revendication 5,
**caractérisé en ce que**, pour chaque chambre (8) du dispositif acoustique auxiliaire (7), au moins le volume de la chambre (8) et la surface des perforations (P2) de la chambre (8) sont adaptés afin de conférer à la chambre (8) une absorption acoustique privilégiée dans au moins une gamme de fréquences acoustiques donnée.

7. Panneau acoustique selon l'une quelconque des revendications précédentes,
**caractérisé en ce que** les perforations (P2) présentent des surfaces de forme incluse dans un cercle de diamètre compris entre 0,1 et 1,2 millimètres.

8. Procédé de fabrication d'un panneau acoustique selon l'une quelconque des revendications 1 à 7, **caractérisé en ce qu'**il comporte une pluralité d'étapes successives (A1 et A2, B1 à B3) comprenant au moins une cuisson et configurées pour fabriquer le panneau acoustique (1) selon l'une quelconque des revendications 1 à 7, qui comporte la structure acoustique (2) pourvue de la de la structure alvéolaire (3) ainsi que de la peau dite résistive (5) et de la peau dite arrière (6) et ledit au moins un dispositif acoustique auxiliaire à cavités (7) qui est solidaire de ladite structure acoustique (2).

9. Procédé de fabrication selon la revendication 8, pour fabriquer un panneau acoustique (1) selon l'une quelconque des revendications 1 à 7,
**caractérisé en ce que** ladite pluralité d'étapes successives (B1 à B3) consiste au moins, respectivement :
- à fabriquer la structure acoustique (2) pourvue de la structure alvéolaire (3) et des peaux résistive et arrière (5, 6) ;
- à fabriquer un ou plusieurs dispositifs acoustiques auxiliaires (7) avec une cuisson ; et
- à fixer le ou les dispositifs acoustiques auxiliaires (7) sur la structure acoustique (2).

## Patentansprüche

1. Schalldämmplatte für ein Luftfahrzeug, wobei die Schalldämmplatte (1) eine Schalldämmstruktur (2) umfasst, die mit einer Wabenstruktur (3), sowie mit einer sogenannten vorderen beständigen Haut (5) und einer sogenannten hinteren Haut (6) versehen ist, die jeweils beiderseits dieser Wabenstruktur (3) angeordnet sind, wobei die Schalldämmplatte (1) mindestens eine Hilfsschalldämmvorrichtung (7) umfasst, die konfiguriert ist, um eine Schallabsorption durchzuführen, wobei die Hilfsschalldämmvorrichtung (7) fest mit der Schalldämmstruktur (2) verbunden ist, wobei die Hilfsschalldämmvorrichtung (7) an einem umlaufenden Rand (21) der Schalldämmstruktur (2) angeordnet ist, wo die Schalldämmplatte (1) ein Abschlussteil zum Befestigen der Schalldämmplatte (1) umfasst, wobei die Hilfsschalldämmvorrichtung eine Hilfsschalldämmvorrichtung mit Hohlräumen (7) ist, die eine Vielzahl von benachbarten Kammern (8) umfassen, die durch Trennwände (9) getrennt sind, wobei jede der Kammern (8) mit Perforationen (P2) versehen ist, und imstande ist, eine Schallabsorption durchzuführen, wobei die Perforationen (P2) auf einer Vorderseite (11, 13) der Hilfsschalldämmvorrichtung mit Hohlräumen (7) vorgesehen sind, wobei die perforierte Vorderseite (11, 13) auf einer gleichen Seite der Schalldämmplatte (1) wie die vordere beständige Haut (5) angeordnet ist,
**dadurch gekennzeichnet, dass** die Vorderseite (13) der Hilfsschalldämmvorrichtung mit Hohlräumen (7) mindestens einen ersten Teil (14), der mit Perforationen (P2) versehen ist, und einen zweiten Teil (15), der mit keinen Perforationen versehen ist, umfasst, und dadurch, dass die beständige Haut (5) der Schalldämmstruktur (2) am zweiten Teil (15) der Vorderseite (13) befestigt ist.

2. Schalldämmplatte nach Anspruch 1,
**dadurch gekennzeichnet, dass** die Hilfsschalldämmvorrichtung mit Hohlräumen (7) eine sogenannte hintere Seite (17) umfasst, die fluchtend oder nicht an der hinteren Haut (6) der Schalldämmstruktur (2) befestigt ist.

3. Schalldämmplatte nach einem der vorstehenden Ansprüche,
**dadurch gekennzeichnet, dass** sie mindestens zwei Hilfsschalldämmvorrichtungen (7) umfasst, die jeweils an mindestens zwei umlaufenden Rändern der Schalldämmstruktur oder an mindestens zwei Abschnitten eines umlaufenden Randes der Schalldämmstruktur angeordnet sind.

4. Schalldämmplatte nach einem der Ansprüche 1 bis 3,
**dadurch gekennzeichnet, dass** die Hilfsschalldämmvorrichtung (7) Kammern (8) mit identischem Volumen umfasst.

5. Schalldämmplatte nach einem der Ansprüche 1 bis 3, **dadurch gekennzeichnet, dass** die Hilfsschalldämmvorrichtung (7) Kammern (8) mehrerer unterschiedlicher Arten (T1, T2) umfasst.

6. Schalldämmplatte nach Anspruch 5,
**dadurch gekennzeichnet, dass** für jede Kammer (8) der Hilfsschalldämmvorrichtung (7) mindestens das Volumen der Kammer (8) und die Oberfläche der Perforationen (P2) der Kammer (8) angepasst sind, um der Kammer (8) eine begünstige Schallabsorption in mindestens einem gegebenen Schallfrequenzbereich zu verleihen.

7. Schalldämmplatte nach einem der vorstehenden Ansprüche,
**dadurch gekennzeichnet, dass** die Perforationen (P2) Oberflächen in einer Form aufweisen, die in einem Kreis mit einem Durchmesser beinhaltet ist, der zwischen 0,1 und 1,2 Millimetern liegt.

8. Verfahren zum Herstellen einer Schalldämmplatte nach einem der Ansprüche 1 bis 7,
**dadurch gekennzeichnet, dass** es eine Vielzahl von aufeinanderfolgenden Schritten (A1 und A2, B1 bis B3) umfasst, die mindestens ein Brennen umfassen, und konfiguriert sind, um die Schalldämmplatte (1) nach einem der Ansprüche 1 bis 7 herzustellen, welche die Schalldämmstruktur (2) umfasst, die mit der Wabenstruktur (3), sowie der beständigen Haut (5) und der sogenannten hinteren Haut (6) und der mindestens einen Hilfsschalldämmvorrichtung mit Hohlräumen (7) versehen ist, die fest mit der Schalldämmstruktur (2) verbunden ist.

9. Verfahren zum Herstellen nach Anspruch 8, zum Herstellen einer Schalldämmplatte (1) nach einem der Ansprüche 1 bis 7, **dadurch gekennzeichnet, dass** die Vielzahl von aufeinanderfolgenden Schritten (B1 bis B3) jeweils mindestens darin besteht:
- die Schalldämmstruktur (2) herzustellen, die mit der Wabenstruktur (3) und der beständigen und hinteren Haut (5, 6) versehen ist;
- eine oder mehrere Hilfsschalldämmvorrichtungen (7) mit einem Brennen herzustellen; und
- die Hilfsschalldämmvorrichung oder -vorrichtungen (7) auf der Schalldämmstruktur (2) zu befestigen.

## Claims

1. An acoustic panel for aircraft, said acoustic panel (1) including an acoustic structure (2) having a cellular structure (3) and a so-called front resistive skin (5) and a so-called backing skin (6) on respective opposite sides of that cellular structure (3), the acoustic panel (1) including at least one auxiliary acoustic device (7) that is configured to produce acoustic absorption, said auxiliary acoustic device (7) being attached to said acoustic structure (2), said auxiliary acoustic device (7) being arranged on a peripheral edge (21) of the acoustic structure (2) where the acoustic panel (1) includes an edge part for fixing the acoustic panel (1), said auxiliary acoustic device being an auxiliary acoustic device with cavities (7) including a plurality of adjacent chambers (8) separated by shared walls (9), each of said chambers (8) including perforations (P2) and being adapted to produce acoustic absorption, the perforations (P2) being provided on a front face (11, 13) of the auxiliary acoustic device with cavities (7), said perforated front face (11, 13) being arranged on a same side of the acoustic panel (1) as the front resistive skin (5),
**characterized in that** the front face (13) of the auxiliary acoustic device with cavities (7) comprises at least a first part (14) provided with perforations (P2) and a second part (15) with no perforations, and **in that** the resistive skin (5) of the acoustic structure (2) is fixed to the second part (15) of said front face (13).

2. The acoustic panel according to claim 1,
**characterized in that** the auxiliary acoustic device with cavities (7) has a so-called rear face (17) that is fixed to the backing skin (6) of the acoustic structure (2) in an aligned or non-aligned manner.

3. The acoustic panel according to any one of the preceding claims, **characterized in that** it includes at least two auxiliary acoustic devices (7) on at least two peripheral edges of the acoustic structure or on at least two sections of a peripheral edge of the acoustic structure.

4. The acoustic panel according to any one of claims 1 to 3, **characterized in that** the auxiliary acoustic device (7) includes chambers (8) of identical volume.

5. The acoustic panel according to any one of claims 1 to 3, **characterized in that** the auxiliary acoustic device (7) includes chambers (8) of different types (T1, T2).

6. The acoustic panel according to claim 5,
**characterized in that**, for each chamber (8) of the auxiliary acoustic device (7), at least the volume of the chamber (8) and the area of the perforations (P2) of the chamber (8) are adapted to confer on the chamber (8) preferential acoustic absorption in at least one given range of acoustic frequencies.

7. The acoustic panel according to any one of the preceding claims, **characterized in that** the perforations (P2) have surfaces of a shape included in a circle having a diameter between 0.1 and 1.2 millimeters inclusive.

8. A method of manufacturing an acoustic panel according to any one of claims 1 to 7,
**characterized in that** it includes a plurality of successive steps (A1 and A2, B1 to B3) including at least one curing and configured to manufacture the acoustic panel (1) according to any one of claims 1 to 7, that includes the acoustic structure (2) having the cellular structure (3) and the so-called resistive skin (5) and the so-called backing skin (6) and said at least one auxiliary acoustic device with (7) cavities that is attached to said acoustic structure (2).

9. The manufacturing method according to claim 8, for manufacturing an acoustic panel (1) according to any one of claims 1 to 7,
**characterized in that** said plurality of successive steps (B1 to B3) consists at least in:
- manufacturing the acoustic structure (2) having the cellular structure (3) and the resistive and backing skins (5, 6);
- manufacturing one or more auxiliary acoustic devices (7), including curing; and
- fixing the auxiliary acoustic device or devices (7) to the acoustic structure (2).
